# NEUE EUROPÄISCHE PATENTSCHRIFT

(11) **EP 0 346 849 B2**
(45) Veröffentlichungstag und Bekanntmachung des Hinweises auf die Entscheidung über den Einspruch: **12.06.1996**
(45) Hinweis auf die Patenterteilung: 21.10.1992
(21) Anmeldenummer: 89110719.5
(22) Anmeldetag: 13.06.1989
(51) Int. Cl.: H02M 3/335, H04N 3/20

(54) **Schaltnetzteil mit Schutz zur Begrenzung einer Ausgangsspannung**
Switching power supply with protection for limiting of output voltage
Alimentation à découpage avec protection pour limiter la tension de sortie

(30) Priorität: 16.06.1988 DE 3820558
(43) Veröffentlichungstag der Anmeldung: 20.12.1989
(73) Patentinhaber: SIEMENS AKTIENGESELLSCHAFT, D-80333 München (DE)
(72) Erfinder: Dangschat, Rainer, D-8011 Landsham (DE)

(56) Entgegenhaltungen:
- EP-A- 0 143 359
- EP-A- 0 293 846
- DE-A- 3 411 878
- US-A- 4 335 335
- SOVIET INVENTIONS ILLUSTRATED Derwent Publications Ltd., London, GB Section U24, N E6695, week E16 & SU-A-845213 (BRYZGALOV) 17 july 1981
- SIEMENS Technische Beschreibung "Integrierte Schaltnetzteil-Steuerschaltungen TDA 4700, TDA 4718, TDA 4716, TDA 4714 Funktion und Anwendung", Deckblatt, Seite 1, Seiten 18 bis 28
- ELEKTRONIK, 1986, Heft 9, Seiten 48 bis 51

## Beschreibung

Die Erfindung betrifft ein Schaltnetzteil mit Schutz zur Begrenzung einer Ausgangsspannung und einer Ansteuereinrichtung zum Ansteuern eines Schalttransistors, der ein MOS-Transistor ist und über den eine Gleichspannung periodisch an eine Primärwicklung eines Übertragers schaltbar ist, wobei der Übertrager mindestens eine Sekundärwicklung aufweist, an der über eine Gleichrichteranordnung die Ausgangsspannung abgreifbar ist.

Ein solches Schalchetzteil ist aus dem Datenbuch "Integrierte Schaltnetzteil-Steuerschaltungen TDA 4700, TDA 4718, TDA 4716, TDA 4714, Funktion und Anwendung", Seite 18 bis 28 bekannt. Eine Schaltungsanordnung für ein Schaltnetzteil, das einen bipolaren Schalttransistor verwendet, ist aus der EP-A-0 143 359 bekannt. Zum Schutz vor einer zu hohen Spannung auf der Sekundärseite des Schaltnetzteils ist dort ein Thyristor vorgesehen, der bei einem zu hohen Strom auf der Primärseite den Schalttransistor periodisch abschaltet.

Es ist weiterhin bekannt, die Ausgangsspannung von Schaltnetzteilen mit einem Regelkreis zu stabilisieren. Die Erfassung der Regelgröße bzw. Regelabweichung kann über eine Regelwicklung am Übertrager des Schaltnetzteiles - vgl. Siemens Produktinformation "ICs für die Unterhaltungselektronik, SNTs", Ausgabe 8.87 - oder über einen Optokoppler erfolgen. Über eine Steuer- und Überwachungseinrichtung wird der Schalttransistor in Abhängigkeit von der ermittelten Regelgröße bzw. Regelabweichung angesteuert.

Ist bei diesen bekannten Schaltungsanordnungen aber der Regelkreis gestört, so kann sich die Ausgangsspannung des Schaltnetzteiles auf unzulässige Werte erhöhen. Bei einem Anstieg der Ausgangsspannung von 20 bis 40 % bleiben die Signalverarbeitungsstufen der Steuer- und Überwachungseinrichtung funktionsfähig, da deren Versorgungsspannungen üblicherweise nachstabilisiert sind.

Besonders problematisch wird dies beim Einsatz des Schaltnetzteiles zur Stromversorgung von Fernsehgeräten. Wenn nämlich die nichtstabilisierte Versorgungsspannung der Zeilenablenkschaltung (H-Ablenkung) um diesen Prozentsatz ansteigt, so steigt im gleichen Verhältnis auch die Hochspannung an der Bildröhre des Fernsehgerätes an, z.B. von 25 auf 35 kV. Das Fernsehbild erscheint dem Betrachter leicht vergrößert, aber scharf, so daß das Gerät üblicherweise weiter benutzt wird. Die Röntgenstrahlen-Grenzwerte werden somit in gefährlicher Weise überschritten. Die Röntgenstrahlen Verordnung in den einzelnen Ländern schreibt deshalb sichere Schutzschaltungen vor, die das Hochlaufen der Hochspannung an der Bildröhre des Fernsehgerätes verhindert. In der Bundesrepublik Deutschland liegt der Grenzwert der zulässigen Röntgenstrahlung von Fernsehgeräten z.B. bei 30 kV.

Das Hauptproblem liegt darin, daß die heute üblicherweise in Schaltnetzteilen und H-Ablenkschaltungen der Zeilenendstufe verwendeten Bipolartransistoren einen sehr großen Sicherheitsabstand in der Spannungsfestigkeit aufweisen. Z. B. wird der Bipolartransistor BU 508 im Schaltnetzteil mit ca. 700 V und in einer 90°-Zeilenendstufe mit ca. 950 V betrieben. Die Grenzdaten dieses Bipolartransistors BU 508 sind 1500 V und die Zerstörungsgrenze liegt bei 1700 bis 1800 V. Dies bedeutet, daß die Endstufen fast nie durch Überspannung ausfallen, aber bei gestörter Regelspannung gefährlich hohe Ausgangsspannungen des Netzteils und damit zu hohe Hochspannungen an der Bildröhre und damit gefährlich hohe Röntgenstrahlen auftreten.

Der Erfindung liegt die Aufgabe zugrunde, eine Schaltungsanordnung für ein Schaltnetzteil anzugeben, mit der ein unzulässiges Ansteigen der Ausgangsspannung zuverlässig und mit geringstem Aufwand vermieden werden kann.

Diese Aufgabe wird gelöst durch ein Schaltnetzteil gemäß den Merkmalen des Patentanspruchs 1.

Durch das erfindungsgemäße Schaltnetzteil wird die Betriebssicherheit des Schaltnetzteils höher oder zumindest gleich hoch wie bei einem Bipolartransistor mit 100 %iger Spannungssicherheit oder bei einem MOS-Transistor bei 40 %iger Spannungssicherheit.

Durch äußere Einflüsse, wie z. B. Bildröhrenuberschläge, blitzbedingte Überspannungen oder Synchro-nisationsstörungen im Schaltnetzteil können einmalige sehr hohe Sperrspannungsspitzen im Schaltnetzteil auftreten. Die Erfindung nutzt die Tatsache aus, daß diese Sperrspannungsspitzen für avalanchefeste MOS-Transistoren, welche z. B. aus der Europäische Patentanmeldung EP-A-293 846 bekannt sind, ungefährlich sind und werden - ähnlich wie bei einer Leistungszenerdiode - sicher begrenzt. Dabei dürfen durchaus Stromspitzen in der Größenordnung bis zu einigen Ampere auftreten. Wichtig ist, daß die durch den Begrenzungs-effekt hervorgerufene Verlustleistung nicht zu einer Temperaturüberschreitung über die Grenzwerte des avalanchefesten MOS führt.

Einmalige Spannungsspitzen am avalanchefesten MOS-Transistor, selbst wenn die Spitzenleistung im KVA-Bereich liegt, sind also erfindungsgemäß zulässig. Wird dagegen die zulässige Drain-Source-Spannung des avalanchefesten MOS-Transistors periodisch bei jedem Impuls überschritten, so wird er durch die auftretende Verlustleistung sehr schnell überhitzt und zerstört. Bei solchen avalanchefesten MOS-Transistoren wie z. B. avalanchefeste SIPMOS-Transistoren liegt die Zerstörungsgrenze bei der "Zenergrenze". Damit wird auch bei einem Ausfall des Regelkreises wirksam verhindert, daß die Ausgangsspannung des Schaltnetzteiles um mehr als die bei der Entwicklung vorgegebenen 5 % bis 20 % überschritten wird.

Dies stellt einen sicheren Schutzmechanismus für das Schaltnetzteil dar, der ohne jeglichen zusätzlichen Bauelementeaufwand zu realisieren ist

Die Erfindung wird im folgenden anhand eines Ausführungsbeispieles im Zusammenhang mit vier Figuren näher erläutert Es zeigen:
FIG 1 einen Spannungsverlauf am Lastkreis eines Schalttransistors in einem Schaltnetzteil bei Normalbetrieb im eingeschwungenen Zustand mit zulässiger Sperrspannung bei einem Bipolartransistor, MOS-Transistor und einem erfindungsgemäß avalanchefesten MOS-Transistor,
FIG 2 eine erfindungsgemäße Schaltungsanordnung eines Schaltnetzteiles mit avalanchefesten SIPMOS-Transistor,
FIG 3 die Drain-Source-Spannung bei einem avalanchefesten SIPMOS-Transistor in einem Schaltnetzteil bei periodischer Begrenzung,
   und
FIG 4 die Drain-Source-Spannung bei einem avalanchefesten SIPMOS-Transistor in einem Schaltnetzteil bei völliger Begrenzung.

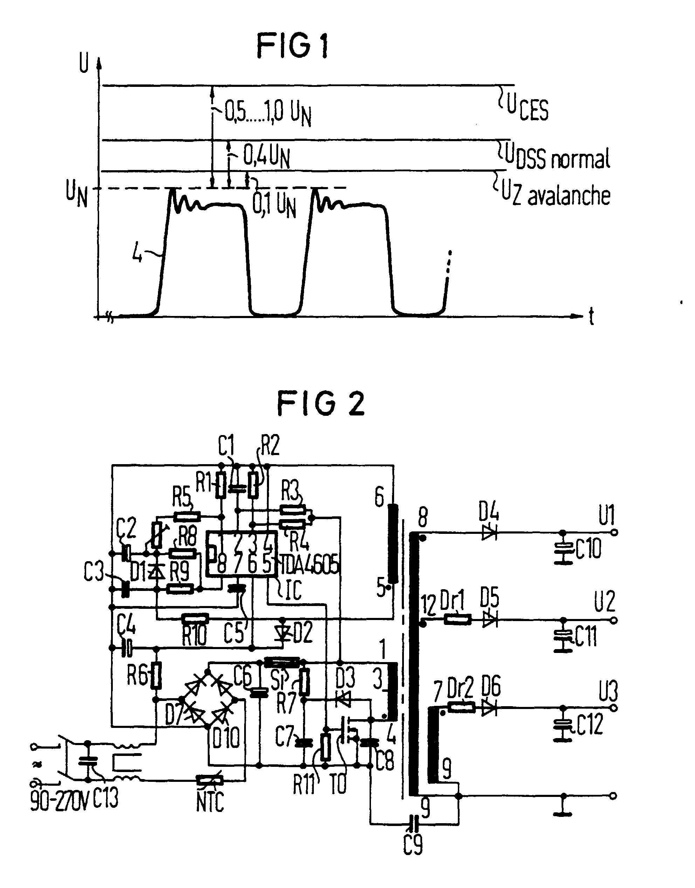

FIG 1 zeigt den typischen Spannungsverlauf am Lastkreis des Schalttransistors in einem Schaltnetzteil bei Normalbetrieb im eingeschwungenen Zustand. Wird als Schalttransistor ein Bipolartransistor eingesetzt, so bezeichnet4 die Kollektor-Emitter-Spannung U_{CE} dieses Bipolartransistors bzw. bei einem MOS-Transistors dessen Drain-Source-Spannung U_{DS}. Nach dem Abschalten des Schalttransistors treten die in FIG 1 dargestellten Überschwinger auf. U_{N} bezeichnet die am Schalttransistor abfallende Spitzensperrspannung bei Normalbetrieb und einer bestimmten vorgegebenen Eingangsspannung des Schaltnetzteiles. Bei einer Wechselspannung von 220 V am Eingang des Schaltnetzteiles liegt U_{N} z. B. bei 500 V.

Wird als Schalttransistor ein Bipolartransistor eingesetzt, so muß eine Spannungssicherheit von 50 % bis 100 % vorgesehen werden. Das heißt daß die zulässige Kollektor-Emitterspannung U_{CES} etwa 50 % bis 100 % höher als die am Bipolartransistor bei Normalbetrieb auftretende Spannung gewählt werden muß. Dies ist deswegen notwendig, weil ein Bipolartransistor durch eine einmalige die zulässige Kollektor-Emitterspannung U_{CES} überschreitende Spannungsspitze zerstört wird. Auch normale MOS-Transistoren werden durch einmalig kurzes Überschreiten der zulässigen Drain-Source-Spannung U_{DSS} sofort zerstört.

Deshalb muß eine ähnlich hohe Spannungssicherheit bei der Entwicklung des Schaltnetzteiles mit MOS-Transistoren berücksichtigt werden. Die Spannungssicherheit eines normalen MOS-Transistors liegt bei etwa 40 %.

Gemäß der Erfindung weist das Schaltnetzteil einen avalanchefesten MOS-Transistor, vorzugsweise ein avalanchefester SIPMOS-Transistor, auf. Das Schaltnetzteil, insbesondere das Sperrwandlernetzteil, wird so dimensioniert, daß eine Spannungssicherheit zur Zerstörungsgrenze des avalanchefesten SIPMOS-Transistor von nur 5 % bis 20 % vorgesehen ist, Die Zenerspannung des avalanchefesten SIPMOS-Transistors ist in FIG 1 mit U_{Zavalanche} bezeichnet.

In FIG 2 ist ein Ausführungsbeispiel für ein erfindungsgemäßes Sperrwandlerschaltnetzteil dargestellt. Dieses Schaltnetzteil ist bereits in der Produktinformation von Siemens "ICs für die Unterhaltungselektronik, SNTs, Ausgabe 8.87" auf Seite 57 beschrieben. Im Gegensatz zum dort verwendeten normalen SIPMOS-Transistor BUZ 90 wird erfindungsgemäß ein avalanchefester SIPMOS-Transistor verwendet. Dieser avalanchefeste SIPMOS Transistor ist z.B. unter der Bezeichnung BUZ 90* bekannt Dieser avalanchefeste SIPMOS-Transistor BUZ 90* hat eine zulässige Drain-Source-Spannung von 600 V und eine Zenerspannung U_{Z avalanche} von ca. 630 V, d.h., daß bei dauerhaftem Überschreiten dieser 630 V der avalanchefeste SIPMOS-Transistor zerstört wird. Das Schaltnetzteil ist für Eingangsspannungen von 90 bis 250 V ausgelegt und weist eine integrierte Steuer- und Überwachungseinrichtung IC, z. B. die integrierte Schaltung TDA 4605, zur Ansteuerung des avalanchefesten SIPMOS-Transistors T0 auf.

Außerdem ist die Schaltungsanordnung so dimensioniert, daß eine Spannungssicherheit zur Zerstörungsgrenze des avalanchefesten SIPMOS-Transistors T0 von 5 % bis 20 % vorgesehen ist Dies geschieht durch die Dimensionierung des Transformators (Windungszahlverhältnis, Kopplungsfaktor) und der Beschaltung des Rückschlagkreises.

Mit der Bedämpfungskombination, bestehend aus der Diode D3, dem Widerstand R7 und dem Kondensator C7, können die oben bereits angesprochenen Überschwinger der Spannung im Schaltnetzteil begrenzt werden.

Im folgenden ist eine bevorzugte Dimensionierung der Bauelemente des in FIG 2 dargestellten Sperrwandlerschaltnetzteiles angeführt

| | |
|---|---|
| R1 220 Ohm | C1 3,9 nF |
| R2 8,2 kOhm | C2 1µF |
| R3 270 kOhm | C3⁻1 nF |
| R4 750 kOhm | C4 47 µF/25 V |
| R5, R11 4,7 kOhm | C5 220 nF |
| R6 22 kOhm | C6 150 µF/83 V |
| R7, R9 10 kOhm | C7 33 nF |
| R8 100 kOhm | C8 270 pF |
| R10 100 Ohm | C9 2,2 nF |
| D1 1 N4148 | C10 47 µF/250 V |
| D2 1 N4148 | C11 1000 µF/25 V |
| D3, D4, BYW 76 | C12 470 µF/25 V |
| NTC S231 | D5, D6, BYW 72 |
| IC TDA 4605 | D7-D10 1 N4007 |
| T0 BUZ 90* | P 2,2 KOhm |
| Trafo TD 3202 | |
| Si F 0,8 A | |

An den Ausgangsklemmen des Schaltnetzteiles liegt am Verbindungspunkt des Kondensator C10 und der Diode D4 bei Normalbetrieb eine gleichgerichtete Spannung von 124 V an, während am Verbindungspunkt der Diode D5 und des Kondensators C11 16 V und am Verbindungspunkt der Diode D6 und des Kondensators C12 9V anliegen.

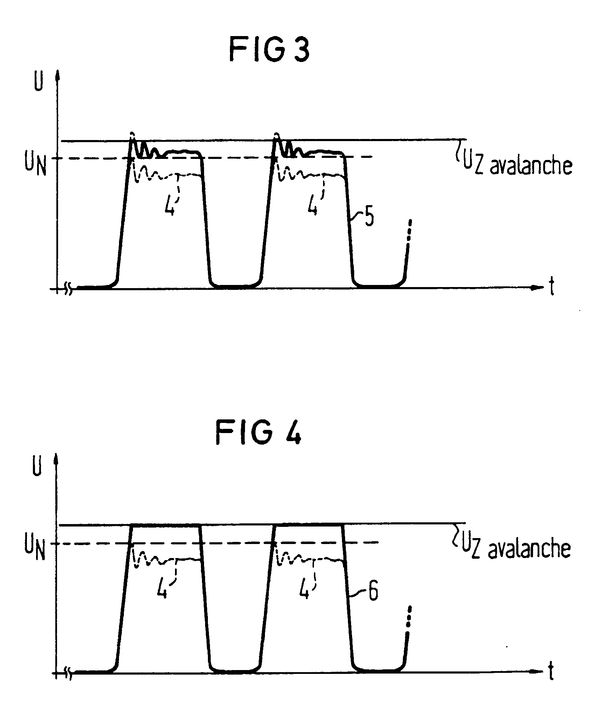

In FIG 3 ist die Drain-Source-Spannung 5 am erfindungsgemäß avalanchefesten SIPMOS-Transistors bei erhöhter Eingangsspannung dargestellt. Mit dem Bezugszeichen 4 ist wieder die Drain-Source-Spannung bei Normalbetrieb bezeichnet. Die auftretenden hohen Sperrspannungsspitzen werden am avalanchefesten SIPMOS-Transistor ähnlich wie bei einer Leistungszenerdiode begrenzt Im avalanchefesten SIPMOS-Transistor entsteht eine hohe Verlustleistung. Treten die hohen Sperrspannungsspitzen nur kurzzeitig (Minutenbereich) auf, so wird der avalanchefeste SIPMOS-Transistor nicht beschädigt. U_{Z avalanche} bezeichnet wie bereits im Zusammenhang mit der FIG 1 erläutert, die Zenerspannung am avalanchefesten SIPMOS-Transistor.

In FIG 4 ist die Drain-Source-Spannung 6 am avalanchefester SIPMOS-Transistor bei totaler Begrenzung dargestellt. Der avalanchefeste SIPMOS-Transistor weist eine sehr hohe Verlustleistung auf und wird schnell zerstört. Dadurch ist es nicht möglich, daß auch bei ausgefallenem Regelkreis des Schaltnetzteiles die Ausgangsspannung um mehr als die bei der Entwicklung des Schaltnetzteiles vorgegebenen 5 % bis 20 % überschritten wird. Damit wird es aber unmöglich, daß die Röntgenstrahl-Grenzwerte am Fernsehgerät überschritten werden.

Es ist noch anzumerken, daß das erfindungsgemäße Schaltnetzteil natürlich nicht allein auf die Verwendung in Bildschirmgeräten beschränkt ist Vielmehr kann das hier vorgestellte Schaltungskonzept überall dort in Schaltnetzteilen eingesetzt werden, in denen die Ausgangsspannungen nicht überschritten werden darf, wie z. B. in Computern etc..

## Patentansprüche

1. Schaltnetzteil mit Schutz zur Begrenzung einer Ausgangsspannung und einer Ansteuereinrichtung zum Ansteuern eines Schalttransistors (TO), der ein MOS-Transistor ist und über den eine Gleichspannung periodisch an eine Primärwicklung (3) eines Übertragers schaltbar ist, wobei der Übertrager mindestens eine Sekundärwicklung aufweist, an der über eine Gleichrichteranordnung die Ausgangsspannung abgreifbar ist, **dadurch gekennzeichnet**, daß der Schalttransistor (TO) ein avalanchefester MOS-Transistor ist und daß das Schaltnetzteil so dimensioniert ist, daß zwischen dem sicheren Dauerbetrieb des Schaltnetzteils und der Zerstörungsgrenze des avalanchefesten MOS-Transistors eine Spannungssicherheit von 5 % bis 20 % vorgesehen ist, indem die maximal zulässige Spannung (Zenerspannung) des avalanchefesten MOS-Transistors um 5 % bis 20 % über der im Normalbetrieb des Schaltnetzteils auftretenden Drain-Source-Spannung des MOS-Transistors (TO) liegt.

2. Schaltnetzteil nach Anspruch 1, **gekennzeichnet** durch die Verwendung in einem Bildschirmgerät.

## Claims

1. Switched-mode power supply with a protector system for limiting an output voltage and a drive device for driving a switching transistor (TO), which is an MOS transistor and via which a DC voltage can be switched periodically to a primary winding (3) of a transformer, the transformer having at least one secondary winding at which the output voltage can be tapped via a rectifier arrangement, characterised in that the switching transistor (TO) is an avalanche-proof MOS transistor and in that the switched-mode power supply is dimensioned so that a voltage safety factor of 5% to 20% is provided between the reliable continuous operation of the switched-mode power supply and the destruction limit of the avalanche-proof MOS transistor, the maximum permissible voltage (Zener voltage) of the avalanche-proof MOS transistor being 5% to 20% above the drain-to-source voltage of the MOS transistor (TO) occurring in normal operation of the switched-mode power supply.

2. Switched-mode power supply according to Claim 1, characterised by use in a picture screen device.

## Revendications

1. Alimentation à découpage ayant une protection destinée à limiter une tension de sortie et un dispositif de commande d'un transistor (TO) de commutation, qui est un transistor MOS et par l'intermédiaire duquel une tension continue peut être branchée périodiquement à un enroulement primaire (3) d'un transformateur, le transformateur comportant au moins un enroulement secondaire, duquel peut être prélevé, par l'intermédiaire d'un dispositif redresseur, la tension de sortie, caractérisée en ce que le transistor (TO) de commutation est un transistor MOS résistant à l'avalanche et l'alimentation à découpage est telle qu'il est prévu une sécurité de tension de 5% à 20% entre le fonctionnement permanent sûr de l'alimentation à découpage et la limite de destruction du transistor MOS résistant à l'avalanche, par le fait que la tension maximale admissible (tension de Zener) du transistor MOS résistant à l'avalanche est de 5% à 20% supérieure à la tension drain-source du transistor MOS (TO), qui apparaît en fonctionnement normal de l'alimentation à découpage.

2. Alimentation à découpage suivant la revendication 1, caractérisée par son utilisation dans un appareil à écran de visualisation.
